# EUROPÄISCHE PATENTSCHRIFT

(11) **EP 0 642 771 B1**
(45) Veröffentlichungstag und Bekanntmachung des Hinweises auf die Patenterteilung: **09.06.1999**
(21) Anmeldenummer: 94117832.9
(22) Anmeldetag: 28.06.1992
(51) Int. Cl.: A61C 17/06

(54) **Zentrifuge**
Centrifuge
Centrifugeuse

(30) Priorität: 03.07.1991 DE 4121934
(43) Veröffentlichungstag der Anmeldung: 15.03.1995
(62) Teilanmeldung aus: 92110937.7
(73) Patentinhaber: Dürr-Dental GmbH & Co. KG, D-74321 Bietigheim-Bissingen (DE)
(72) Erfinder: Hofmann, Hans-Joachim, D-73630 Remshalden (DE); Nonnenmacher, Eberhardt, D-74379 Ingersheim (DE); Schnepf, Jürgen, D-74080 Heilbronn (DE)
(74) Vertreter: Ostertag, Reinhard

(56) Entgegenhaltungen:
- WO-A-86/03669
- DE-A- 3 521 929
- DE-A- 3 916 742
- DE-C- 3 737 002
- GB-A- 2 220 705
- US-A- 3 398 866
- US-A- 4 538 963

## Beschreibung

Die Erfindung betrifft eine Zentrifuge zum Abscheiden feiner Feststoffpartikel aus dem an einem dentalen Arbeitsplatz anfallenden Abwasser gemäß dem Oberbegriff des Anspruches 1.

Eine derartige Zentrifuge ist in der DE-A-39 16 742 beschrieben.

In der US-A-3 398 866 ist eine Umwälzpumpe für einen Geschirrspüler offenbart, bei welcher das Pumpenlaufrad auf seiner einen Stirnfläche eine Vielzahl gekrümmter Pumpflügel trägt, welche in Umfangsrichtung in unterschiedlichem Winkelabstand verteilt sind. Auf diese Weise wird erreicht, daß Geräusche unterdrückt werden, die beim Vorbeilaufen der Pumpflügel an der Stufe zwischen auslaßseitigem und einlaßseitigem Ende eines spiralförmigen Auslaßkanales entstehen.

Bei den bekannten Zentrifuge, die mit einem Zyklon verblockt ist, stellt die kegelstumpfförmige Leitwand, die in das Innere der Zentrifugentrommel reicht, sicher, daß keine direkte Strömungsmittelverbindung zwischen dem das zu zerlegende Gemisch zuführenden Speiserohr und der Überlauföffnung der Zentrifugentrommel möglich ist.Sie dient auch als Verlängerung der Zyklonwand.

Die bekannte Zentrifuge arbeitet als Nachrüstgerät, welches separat an einem Arbeitsplatz aufgestellt wird, zufriedenstellend und mit gutem Abscheidegrad auch für feine Amalgampartikel.

Für Amalgam-Abscheidezentrifugen, die in ein Speibecken-Kabinett oder dergleichen eingebaut werden sollen, sind kleinere radiale Abmessungen notwendig. Typischerweise beträgt für eine solche Einbau-Einheit der Trommeldurchmesser etwa 11 cm. Bei im übrigen unveränderter Gerätekonzeption ergibt sich aus einer solchen Geräteverkleinerung eine Verminderung des Amalgam-Abscheidegrades von einigen Prozent. Man könnte versuchen, durch Erhöhen der Trommeldrehzahl wieder auf vergleichbare Abscheideergebnisse zu kommen, wie bei den größeren Standalone-Zentrifugen.

Man müßte hierzu aber einen teureren Antriebsmotor verwenden. Auch wurde herausgefunden, daß durch reine Drehzahlerhöhung innerhalb vertretbaren Rahmens noch keine vollständige Kompensation der mit der Verkleinerung der Zentrifuge einhergehenden Verschlechterung des Abscheidegrades erhalten wird.

Durch die vorliegende Erfindung soll daher eine Zentrifuge gemäß dem Oberbegriff des Anspruches 1 so weitergebildet werden, daß mit einfachen mechanischen Mitteln, insbesondere ohne Änderung des Antriebes bei kleinen Trommelabmessungen eine Verbesserung der Abscheideleistung erhalten wird.

Diese Aufgabe ist erfindungsgemäß gelöst durch eine Zentrifuge gemäß Anspruch 1.

Die Merkmale der Erfindung gemäß den Ansprüchen 1 bis 6 ist im Hinblick auf einen guten Abscheidegrad von Vorteil. Durch die nichtperiodische Anordnung der Pumpflügel und Dichtflügel, die vom Überlaufflansch der Zentrifugentrommel getragen sind, erhält man beim Vorbeilaufen dieser Flügel an Rücksprüngen und Vorsprüngen des Gehäuses, insbesondere am Auslaßstutzen des Zentrifugengehäuses, keinen Aufbau von Drucksschwingungen, so daß der quasi laminare Charakter des Stromes gereinigter Flüssigkeit über den Überlaufflansch in die Auslaßkammer des Zentrifugengehäuses weniger gestört wird. Als wichtiger weiterer Effekt ergibt sich aus der nichtperiodischen Anordnung der Pumpflügel und Dichtflügel eine deutliche Verminderung des Geräuschniveaus.

Verblockt man eine erfindungsgemäße, kleinere radiale Abmessungen aufweisende Zentrifuge direkt mit einem Luftabscheidezyklon, der koaxial mit der Zentrifugentrommel verschachtelt ist, um eine kurze axiale Gesamtlänge der Kombieinheit zu erzielen, so hat auch der Luftabscheidezyklon kleinere radiale Abmessungen und es ergeben sich zusätzliche Dichtprobleme zwischen dem zusammen mit der Zentrifugentrommel umlaufenden und ins Innere derselben geführten Luftabführrohr und feststehenden Gehäuseteilen. Mit den Weiterbildungen der Erfindung gemäß den Ansprüchen 7 und 8 wird auch bei kleinen radialen Abmessungen des Luftabscheidezyklones eine gute Abdichtung zu festehenden Gehäuseteilen erzielt und eine zwangsweise Rückführung auch im oberen Abschnitt des Luftabscheidezyklones abgeschiedener kleiner Restflüssigkeitsmengen zur Zentrifuge gewährleistet.

Nachstehend wird die Erfindung anhand eines Ausführungsbeispieles unter Bezugnahme auf die Zeichnung näher erläutert.

In dieser zeigen:
- Figur 1:: einen vertikalen axialen Schnitt durch eine kombinierte Luft/Feststoff-Abscheideeinheit für das an einem dentalen Arbeitsplatz anfallende Abwasser;
- Figur 2:: eine Aufsicht auf die Unterseite eines beschaufelten Überlaufflansches einer Zentrifugentrommel der Abscheideeinheit nach Figur 1;

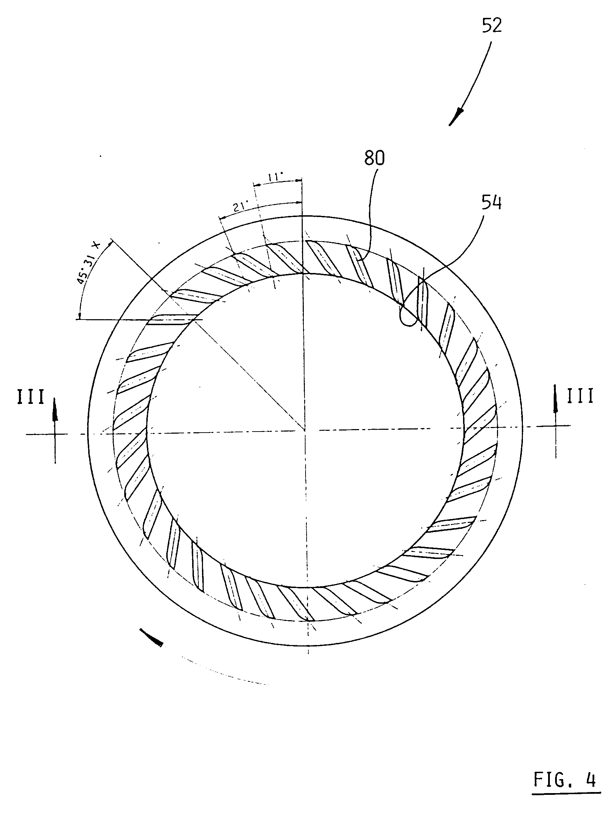

- Figur 3:: einen vertikalen Schnitt durch den Überlaufflansch nach Figur 2 längs der Schnittlinie III-III von Figur 2 und Figur 4;
- Figur 4:: eine Aufsicht auf die Oberseite des Überlaufflansches von Figur 2;
- Figur 5:: einen vertikalen axialen Schnitt durch ein Luftabführrohr eines Luftabscheidezyklones der Abscheideeinheit nach Figur 1;
- Figur 6:: eine Aufsicht auf das Luftabführrohr nach Figur 5; und
- Figur 7:: einen vertikalen axialen Schnitt durch einen oberen Gehäusedeckel des Luftabscheidezyklones der Abscheideeinheit nach Figur 1.

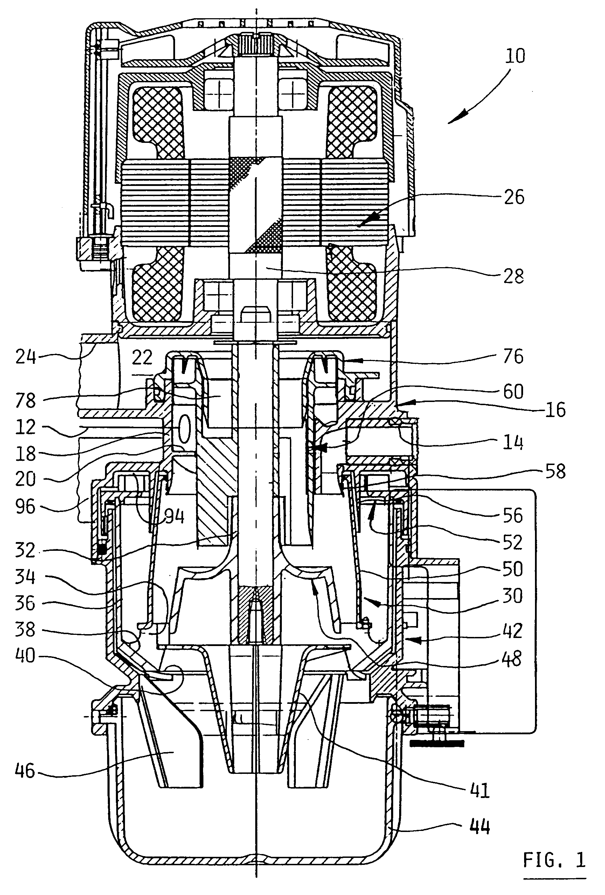

In Figur 1 ist eine insgesamt mit 10 bezeichnete Abscheideeinheit wiedergegeben, die aus dem an einem dentalen Arbeitsplatz anfallenden Abwasser Luftanteile und Feststoffpartikel abscheidet. Unter den Feststoffpartikeln befinden sich insbesondere auch Amalgampartikal, von denen ein Teil nur sehr kleinen Durchmesser aufweist.

Die Abscheideeinheit 10 hat einen ersten Einlaßstutzen 12, der über die nicht dargestellte Ablage des Arbeitsplatzes mit dem ebenfalls nicht dargestellten Speichelheber verbunden ist und luftreiches zu zerlegendes Gemisch erhält. Ein zweiter Einlaßstutzen 14 der Abscheideeinheit ist mit dem Speibecken des Arbeitsplatzes verbunden und erhält nur geringe Luftanteile enthaltendes Abwasser.

Die Einlaßstutzen 12 und 14 sind an ein oberes Gehäusesegment 16 angeformt, das eine zylindrische Zyklonwand 18 aufweist, in welche der Einlaßstutzen 12 ausmündet. Auf ihre Innenfläche ist im unteren Bereich eine wendelförmige Leitrippe 20 vorgesehen. Im oberen Abschnitt des Gehäusesegmentes 16 ist eine Luft-Auslaßkammer 22 ausgebildet, die mit einem Luft-Auslaßstutzen 24 in Verbindung steht. Die Luft-Auslaßkammer 22 ist oben durch das Gehäuse eines elektrischen Antriebsmotors 26 verschlossen, der vom Gehäusesegment 16 getragen ist. Der Antriebsmotor 26 wird so durch die abströmende Reinluft zusätzlich gekühlt.

Eine Motorwelle 28 trägt an ihrem unteren Ende eines insgesamt mit 30 bezeichnete Zentrifugentrommel. Ein Habenabschnitt 32 der letzteren ist über radiale Stege 34 mit einer Umfangswand 36 verbunden. An letztere schließt sich nach unten eine trichterförmige Bodenwand 38 an, welche eine kreisförmige Schlamm-Ablauföffnung 40 begrenzt. Durch letztere erstreckt sich unter größerem radialem Abstand ein Pumpkonus 41 nach unten, der ebenfalls ein umlaufendes Teil der Zentrifugentrommel 30 darstellt.

Die Zentrifugentrommel 30 läuft im Inneren eines mittleren Gehäusesegmentes 42 um, welches am unteren Ende lösbar einen Sammelbehälter 44 für abgeschiedenes Amalgam trägt. An das Gehäusesegment 42 angeformte Beruhigungsflügel 46 erstrecken sich um den Pumpkonus 41 herum in den oberen Abschnitt des Sammelbehälters 44.

An den Nabenabschnitt 32 ist ein Umlenkkörper 48 angeformt, dessen Umfangsfläche kegelförmig ist und dessen obere Stirnfläche kreisbogenförmigen Querschnitt aufweist.

Mit den Stegen 34 ist ferner eine kegelförmige Leitwand 50 fest verbunden, deren unterer Abschnitt zylindrisch und deren oberer Abschnitt kegelförmig ist. Der Winkel, den eine Mantellinie der Leitwand 50 mit der Achse der Zentrifugentrommel 30 einschließt, liegt zwischen 3 und 7°, vorzugsweise bei etwa 5°.

Das obere Ende der Umfangswand 36 trägt einen radial nach innen kragenden Überlaufflansch 52, der eine Überlauföffnung 54 begrenzt.

Der untere Abschnitt des oberen Gehäusesegmentes 16 ist deckelartig ausgebildet und übergreift dicht das obere Ende des mittleren Gehäusesegmentes 42. Von der Deckenwand dieses Deckels hängt eine Dichtwand 56 nach unten, deren Außendurchmesser kleiner ist als der Durchmesser der Überlauföffnung 54, so daß zwischen der Dichtwand 56 und dem Rand der Überlauföffnung 54 ein ringförmiger Spalt verbleibt. Die Innenfläche der Dichtwand 56 ist konisch. Ihr Anstellwinkel entspricht dem der Leitwand 50, und die gesamte Anordnung ist so gewählt, daß zwischen der zusammen mit der Zentrifugentrommel 30 umlaufenden Leitwand 50 und der Dichtwand 56 ein schmaler gestreckter Dichtspalt verbleibt. Von der Deckenwand des vom unteren Abschnitt des oberen Gehäusesegmentes 16 gebildeten Deckels hängt ferner eine zur Dichtwand 56 konzentrische, jedoch weiter innenliegende zweite Dichtwand 58 senkrecht nach unten, deren Außenfläche zylindrisch ist und das geringfügig nach innen umgekantete obere Ende der Leitwand 50 unter geringem Laufspiel durchsetzt.

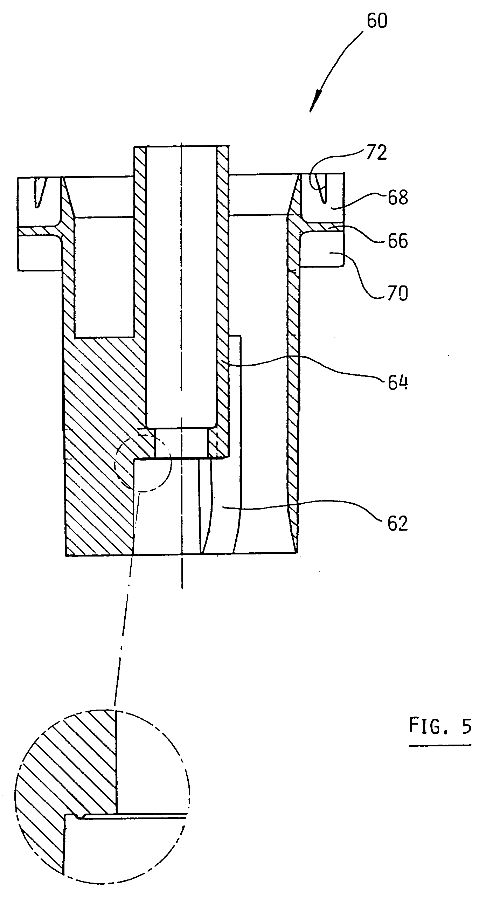

Über der Zentrifugentrommel 30 liegend trägt die Motorwelle 28 ein Luftabführrohr 60, welches über drei in Umfangsrichtung verteilte Stege 62 (vgl. Figur 5) mit einem Nabenteil 64 verbunden ist. Die untere Randkante des Luftabführrohres 60 liegt beim Mittelpunkt der die Oberseite des Umlenkkörpers 48 bildenden Kreisrinne.

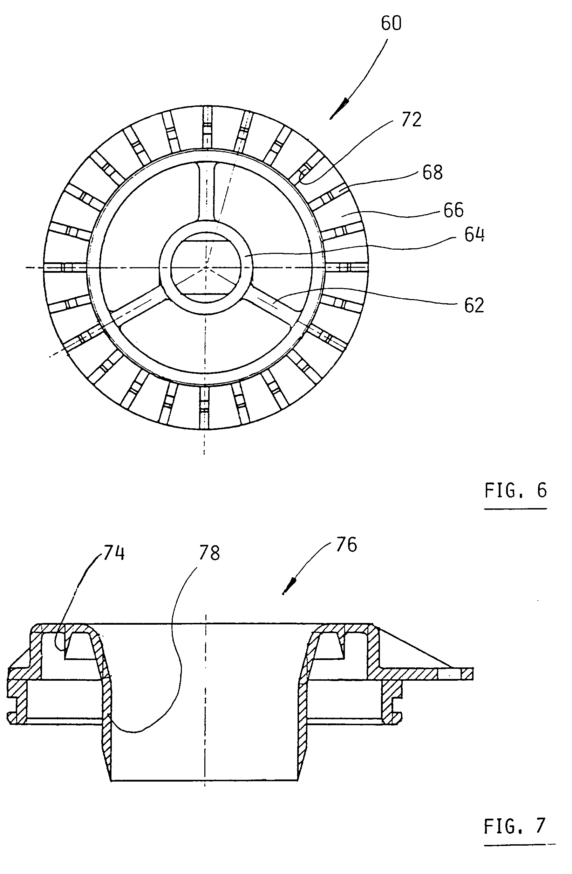

Unter Abstand von seinem oberen Ende hat das Luftabführrohr 60 einen radialen Flansch 66, der auf seiner Oberseite mit Pumpflügeln 68 und auf seiner Unterseite mit Pumpflügeln 70 besetzt ist. Wie insbesondere aus den Figuren 5 und 6 ersichtlich, haben die oberen Pumpflügel 68 jeweils eine spitzwinklige dreieckige Ausnehmung 72, in welche eine entsprechend spitzwinklige dreieckigen Querschnitt aufweisende Sperrippe 74 im engen Gleitspiel eingreifen kann, die von der Unterseite eines Zyklon-Abschlußdeckels 76 herabhängt. Der Abschlußdeckel 76 hat einen mittigen, herabhängenden Verbindungsstutzen 78, der unter kleinem Laufspiel über der Innenfläche des oberen Endes des Luftabführrohres 60 liegt.

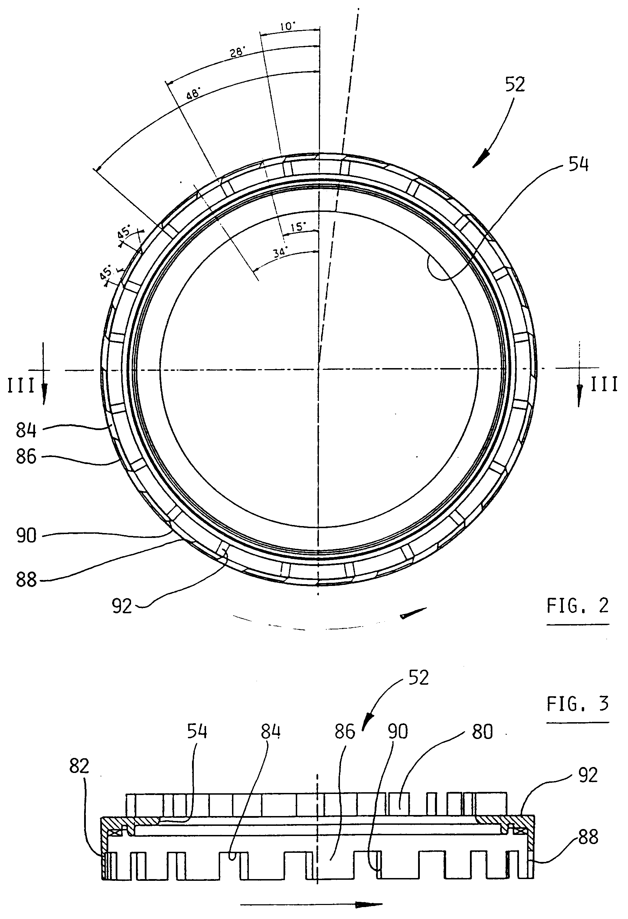

Wie insbesondere aus den Figuren 2 und 3 ersichtlich ist, trägt der Überlaufflansch 52 auf seiner Oberseite Pumpflügel 80. Diese sind nicht unter gleichbleibender Winkelteilung angeordnet, vielmehr schwankt der Winkelabstand aufeinanderfolgender Pumpflügel statistisch um den Mittelwert 11°. Der Schwankungsbereich beträgt +/-2°. An den äußeren Rand des Überlaufflansches 52 ist eine herabhängende Schürze 82 angeformt, die zur unteren Randkante hin auslaufende Fenster 84 aufweist, so daß sich einzelne Pumpflügel 86 ergeben. Die in Drehrichtung gesehen vorderen und hinteren Begrenzungsflächen 88, 90 der Fenster 84 sind unter gleichem Winkel gegen einen durch ihre Mitte gezogenen Radiusstrahl verkippt, der beim betrachteten Ausführungsbeispiel 45° beträgt. Die Teilung der Fenster schwankt mit einer Amplitude von +/-2° statistisch um einen Mittelwert von 17°, während die Teilung der Pumpflügel 86 unabhängig um +/-2° um einen Mittelwert von 17° schwankt.

Wie aus den Figuren 2 und 3 gut ersichtlich, trägt die Unterseite des Überlaufflansches 52 ferner kleine Pumpflügel 92, die winkelmäßig mit der Vorderkante der hinteren Begrenzungsfläche 90 eines Fensters 84 fluchten.

Wie aus Figur 1 ersichtlich, begrenzen der obere Endabschnitt des mittleren Gehäusesegmentes 42 und der untere, als Deckel ausgebildete Abschnitt des oberen Gehäusesegmentes 16 zusammen eine Ringnut, in welcher die Schürze 82 des Überlaufflansches 52 läuft. Über die Pumpflügel 92, die Pumpflügel 86 und den nur kleinen Spalt zwischen der Außenfläche der Schürze 82 und der Innenfläche des als Deckel ausgebildeten unteren Endabschnittes des Gehäusesegmentes 16 ist gewährleistet, daß ein durch diesen Deckel und die Oberseite der Zentrifugentrommel 30 begrenzter Reinwasser-Auslaßraum 94 zuverlässig dynamisch gegen das Innere des die Zentrifugentrommel 30 umgebenden mittleren Gehäusesegmentes 42 abgedichtet ist, so daß von dort keine Verunreinigungen in den Reinwasser-Auslaßraum 94 gelangen können. Letzterer steht mit einem Reinwasser-Auslaßstutzen 96 in Verbindung, der mit der Abwasserkanalisation verbunden ist.

## Patentansprüche

1. Zentrifuge zum Abscheiden feiner Feststoffpartikel aus dem an einem dentalen Arbeitsplatz anfallenden Abwasser, mit
a) einem Gehäuse (16, 42);
b) einer in diesem umlaufenden Zentrifugentrommel, die aufweist: eine zylindrische Umfangswand (36), eine Bodenwand (38), die vorzugsweise eine zu einem Sammelbehälter (44) führende Ablauföffnung (40) aufweist, einen vom oberen Rand der Umfangswand (36) radial nach innen weisenden und eine Überlauföffnung (54) begrenzenden Überlaufflansch (52), der auf seiner Oberseite mit mit Pumpflügeln (80) besetzt ist;
c) einem auf die Zentrifugentrommel (30) arbeitenden Antriebsmotor (26); und
d) einem gehäusefesten Speiserohr für das zu zerlegende Gemisch aus Feststoffpartikeln und Flüssigkeit,
dadurch gekennzeichnet, daß
e) die Pumpflügel (80) in unregelmäßigem Winkelabstand aufeinanderfolgen.

2. Zentrifuge nach Anspruch 1, dadurch gekennzeichnet, daß der Winkelabstand aufeinanderfolgender Pumpflügel (86) unregelmäßig um einen Mittelwert schwankt, vorzugsweise um +/-2° um den Mittelwert von 11°.

3. Zentrifuge nach einem der Ansprüche 1 oder 2, wobei der Überlaufflansch (52) mit in einer Rinne des Gehäuses (16, 42) laufenden herabhängenden Rückpumpflügeln (86) versehen ist, dadurch gekennzeichnet, daß die Rückpumpflügel (86) durch durch Randausnehmungen (84) getrennte Abschnitte einer vom äußeren Rand des Überlaufflansches (52) herabhängenden Schürze (82) gebildet sind.

4. Zentrifuge nach Anspruch 3, dadurch gekennzeichnet, daß die in Umfangsrichtung gesehen vorderen und hinteren Begrenzungsflächen (88, 90) der Randausnehmungen (84) schräg gegenüber sie schneidenden Radialebenen angestellt sind und vorzugsweise parallel zueinander verlaufen, wobei der Anstellwinkel vorzugsweise etwa 45° beträgt.

5. Zentrifuge nach Anspruch 3 oder 4, dadurch gekennzeichnet, daß die Rückpumpflügel (86) und/oder die Randausnehmungen (84) in unregelmäßigem Winkelabstand aufeinanderfolgen.

6. Zentrifuge nach Anspruch 5, dadurch gekennzeichnet, daß der Abstand der Rückpumpflügel (86) und/oder der Abstand der Randausnehmungen (84) unregelmäßig um einen Mittelwert schwankt, vorzugsweise um +/-2° um 17°.

7. Zentrifuge nach einem der Ansprüche 1 bis 6, wobei das Speiserohr durch das untere Ende einer Zyklonwand (18) gebildet ist, die unter kleinem radialem Spiel in das obere Ende der Leitwand (50) der Zentrifugentrommel (30) greift, und wobei mit der Zentrifugentrommel (30) ein Luftabführrohr (60) drehfest verbunden ist, welches zugleich eine umlaufende Innenwand des Zyklons bildet und mit einer Unterdruckquelle verbindbar ist, und wobei ein die Zyklonwand (18) am oberen Ende verschließender Deckel (76) mit einer Sperrippe (74) versehen ist, die in Ausnehmungen (72) unter kleinem Spiel eingreift, welche in mit dem oberen Ende des Luftabführrohres (60) verbundenen Pumpflügeln (68) vorgesehen sind, dadurch gekennzeichnet, daß die Pumpflügel (68) auf einem radialen Flansch (66) angeordnet sind, der unter kleinem radialem Spiel bis zur Innenfläche der Zyklonwand (18) geführt ist.

8. Zentrifuge nach Anspruch 7, dadurch gekennzeichnet, daß die Unterseite des Sperrflansches (66) mit weiteren Pumpflügeln (70) besetzt ist.

## Claims

1. Centrifuge for separating fine solid particles from the waste water occurring at a dental workplace, with
a) a casing (16, 42);
b) a centrifuge drum circulating in this, which has: a cylindrical circumferential wall (36), a bottom wall (38), which has preferably a discharge opening (40) leading to a collecting vessel (44), an overflow flange (52) pointing radially inwards from the upper edge of the circumferential wall (36) and limiting an overflow opening (54), which flange is taken up on its top side with pump vanes (80);
c) a drive motor (26) operating on the centrifuge drum (30); and
d) a casing-fixed feed tube for the mixture of solid particles and liquid to be separated,
characterized in that
e) the pump vanes (80) follow one another at an irregular angular spacing.

2. Centrifuge according to claim 1, characterized in that the angular spacing of consecutive pump vanes (86) varies irregularly around a mean value, preferably by +/- 2° around the mean value of 11°.

3. Centrifuge according to one of claims 1 or 2, the overflow flange (52) being provided with back pump vanes (86) hanging down and running in a channel of the casing (16, 42), characterized in that the back pump vanes (86) are formed by sections of an apron (82) hanging down from the outer edge of the overflow flange (52) and separated by edge recesses (84).

4. Centrifuge according to claim 3, characterized in that the front and rear peripheries (88, 90) of the edge recesses (84) seen in a circumferential direction are set obliquely in relation to radial planes intersecting them and run preferably parallel to one another, the setting angle being preferably roughly 45°.

5. Centrifuge according to claim 3 or 4, characterized in that the back pump vanes (86) and/or the edge recesses (84) follow one another at an irregular angular spacing.

6. Centrifuge according to claim 5, characterized in that the spacing of the back pump vanes (86) and/or the spacing of the edge recesses (84) vary irregularly around a mean value, preferably by +/- 2° around 17°.

7. Centrifuge according to one of claims 1 to 6, the feed tube being formed by the lower end of a cyclone wall (18), which engages with little radial play in the top end of the guide wall (50) of the centrifuge drum (30), and an air discharge tube (60) being connected in a rotationally fixed manner to the centrifuge drum (30), which tube at the same time forms a circulating inner wall of the cyclone and is connectable to a negative pressure source, and a cover (76) closing the cyclone wall (18) at the upper end being provided with a locking rib (74), which engages with little play in recesses (72), which are provided in pump vanes (68) connected to the top end of the air discharge tube (60), characterized in that the pump vanes (68) are arranged on a radial flange (66), which is led with little radial play as far as the inner surface of the cyclone wall (18).

8. Centrifuge according to claim 7, characterized in that the underside of the locking flange (66) is taken up with further pump vanes (70).

## Revendications

1. Centrifugeuse pour séparer de fines particules de matière solide de l'eau usée produite à un poste de travail dentaire, comprenant
a) un corps (16, 42);
b) un panier de centrifugeuse tournant dans ce corps et comportant: une paroi périphérique cylindrique (36), une paroi de fond (38), laquelle présente de préférence une ouverture d'écoulement (40) menant à un récipient collecteur (44), ainsi qu'une bride de débordement (52) dirigée radialement vers l'intérieur à partir du bord supérieur de la paroi périphérique (36) et délimitant une ouverture de débordement (54), bride dont le côté supérieur est garni d'aubes de pompage (80);
c) un moteur d'entraînement (26) agissant sur le panier de centrifugeuse (30); et
d) un tuyau d'alimentation solidaire du corps pour l'amenée du mélange à décomposer de particules de matière solide et de liquide,
caractérisée en ce que
e) les aubes de pompage (88) se suivent avec un espacement angulaire irrégulier.

2. Centrifugeuse selon la revendication 1, caractérisée en ce que l'espacement angulaire d'aubes de pompage (86) successives varie de façon irrégulière autour d'une valeur moyenne, de préférence de +/- 2° autour de la valeur moyenne de 11°.

3. Centrifugeuse selon la revendication 1 ou 2, dans laquelle la bride de débordement (52) est pourvue d'aubes de pompage en arrière (86) qui sont dirigées vers le bas à partir de cette bride et tournent dans une rigole du corps (16, 42), caractérisée en ce que les aubes de pompage en arrière (86) sont formées par des portions, séparées par des évidements (84) pratiqués dans le bord, d'une jupe (82) suspendue au bord extérieur de la bride de débordement (52).

4. Centrifugeuse selon la revendication 3, caractérisée en ce que les faces de délimitation avant et arrière (88, 90), dans le sens circonférentiel, des évidements (84) sont inclinées obliquement par rapport à des plans radiaux qui les coupent et s'étendent de préférence parallèlement entre elles, l'angle d'obliquité étant de préférence d'environ 45°.

5. Centrifugeuse selon la revendication 3 ou 4, caractérisée en ce que les aubes de pompage en arrière (86) et/ou les évidements (84) se suivent avec un espacement angulaire irrégulier.

6. Centrifugeuse selon la revendication 5, caractérisée en ce que l'espacement des aubes de pompage en arrière (86) et/ou l'espacement des évidements (84) varie de façon irrégulière autour d'une valeur moyenne, de préférence de +/- 2° autour de 17°.

7. Centrifugeuse selon une des revendications 1 à 6, dans laquelle le tuyau d'alimentation est formé par l'extrémité inférieure d'une paroi de cyclone (18) qui s'engage avec un petit jeu radial dans l'extrémité supérieure de la paroi directrice (50) du panier de centrifugeuse (30), dans laquelle un tuyau d'évacuation d'air (60) est solidarisé en rotation avec le panier de centrifugeuse (30), tuyau qui forme en même temps une paroi interne tournante du cyclone et peut être raccordé à une source de dépression, et dans laquelle un couvercle (76), fermant la paroi de cyclone (18) à son extrémité supérieure, est pourvu d'une nervure de barrage (74) qui pénètre avec un petit jeu dans des encoches (72) prévues dans des aubes de pompage (68) reliées à l'extrémité supérieure du tuyau d'évacuation d'air (60), caractérisée en ce que les aubes de pompage (68) sont disposées sur une bride radiale (66) qui se prolonge jusqu'en regard de la surface intérieure de la paroi de cyclone (18) dont ce prolongement est séparé par un faible jeu radial.

8. Centrifugeuse selon la revendication 7, caractérisée en ce que le côté inférieur de la bride de retenue (66) est garni d'aubes de pompage supplémentaires (70).
